(19) Europäisches Patentamt
European Patent Office
Office européen des brevets

(11) **EP 3 342 821 B1**

(12) **EUROPEAN PATENT SPECIFICATION**

(45) Date of publication and mention
of the grant of the patent:
**23.04.2025 Bulletin 2025/17**

(21) Application number: **16839315.5**

(22) Date of filing: **24.08.2016**

(51) International Patent Classification (IPC):
**C08L 65/00** *(2006.01)*      **C08K 5/103** *(2006.01)*
**C08L 45/00** *(2006.01)*

(52) Cooperative Patent Classification (CPC):
(C-Sets available)
**C08K 5/103; C08L 65/00; C08L 45/00**      (Cont.)

(86) International application number:
**PCT/JP2016/074658**

(87) International publication number:
**WO 2017/033968 (02.03.2017 Gazette 2017/09)**

(54) **RESIN COMPOSITION AND RESIN MOLDED BODY**

HARZZUSAMMENSETZUNG UND HARZFORMKÖRPER

COMPOSITION DE RÉSINE ET CORPS MOULÉ EN RÉSINE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.08.2015 JP 2015167728**

(43) Date of publication of application:
**04.07.2018 Bulletin 2018/27**

(73) Proprietor: **Zeon Corporation**
**Tokyo 100-8246 (JP)**

(72) Inventors:
• **SATO, Ayumi**
**Tokyo 100-8246 (JP)**
• **FUJII, Kensaku**
**Tokyo 100-8246 (JP)**

• **FURUKO, Akira**
**Tokyo 100-8246 (JP)**

(74) Representative: **Maiwald GmbH**
**Elisenhof**
**Elisenstraße 3**
**80335 München (DE)**

(56) References cited:
WO-A1-2012/063756      JP-A- 2005 029 489
JP-A- 2007 267 647      JP-A- 2013 185 141
JP-A- 2015 096 305      JP-A- 2015 199 939

• **DATABASE WPI Week 201365, Derwent World
Patents Index; AN 2013-N40437, XP002791102**
• **DATABASE WPI Week 201582, Derwent World
Patents Index; AN 2015-69958N, XP002791103**

**(Cont. next page)**

(52) Cooperative Patent Classification (CPC): (Cont.)

C-Sets
**C08K 5/103, C08L 45/00**

**Description**

Technical Field

The present invention relates to a resin composition which hardly whitens even under a hot and humid environment and hardly causes a bleed-out phenomenon of additives, and a resin formed article obtained by forming the resin composition.

Background Art

Recently, alicyclic-structure-containing polymers have been widely used as forming materials or the like for optical formed articles such as lenses and medical formed articles such as pharmaceutical containers, because they are excellent in transparency, heat resistance, chemical resistance and the like.

However, the alicyclic-structure-containing polymers sometimes whitened under a hot and humid environment for a long time. Thus, resin compositions containing an alicyclic-structure-containing polymer and an additive capable of preventing whitening have been conventionally used as forming materials for resin formed articles used under a hot and humid environment.

For example, Patent Literature 1 describes a resin composition containing an alicyclic-structure-containing polymer and a particular pentaerythritol derivative composition. Further, this literature also describes that a transparent thermoplastic formed article, in which optical properties are excellent and deterioration of the optical properties under a hot and humid environment is suppressed can be obtained by using the resin composition.

Additionally, glyceride-based compounds have been conventionally used as antistatic agents, anticlouding agents or the like because they can provide hydrophilicity to hydrophobic resins.

For example, Patent Literature 2 describes an antistatic composition containing a glyceride-based compound and a polyolefin resin composition containing a polyolefin resin and a glyceride-based compound.

However, Patent Literature 2 does not describe an effect generated by combining an alicyclic-structure-containing polymer with a glyceride-based compound.

Patent Literature 3 discloses a thermosetting crosslinked cyclic olefin resin film obtained by ring-opening metathesis polymerization of a polymerizable composition including: (a) 100 pts.mass of a cyclic olefin monomer; and (b) 0.05-8 pts.mass of a fatty acid ester-based lubricant.

Patent Literature 4 discloses a resin composition comprising a polymer having an alicyclic structure in at least part of a repeating structure unit, and a fatty acid ester of a fatty acid and a polyhydric alcohol having one or more ether groups.

Citation List

Patent Literature

> PTL 1: JP-A-2010-184955
> PTL 2: JP-A-2015-110731
> PTL 3: JP-A-2013-185141
> PTL 4: JP-A-2015-199939

Summary of Invention

Technical Problem

Patent Literature 1 describes that this transparent thermoplastic formed article in which optical properties are excellent and deterioration of the optical properties under a hot and humid environment is suppressed, can be obtained by using the resin composition.

However, the investigation by the present inventors has revealed that the increased content of a pentaerythritol derivative is necessary to sufficiently exert its effect, and as a result, the pentaerythritol derivative readily bleeds out from the resin composition or the resin formed article.

The phenomenon of the pentaerythritol derivative as an additive to bleed out from the resin composition or the resin formed article (bleed-out phenomenon) causes performance deterioration in an optical formed article. In addition, in a medical formed article, it may cause contamination of medicines and the like. Furthermore, when an additive bleeds out during forming (bleed-out phenomenon of additive), a die is contaminated, resulting in lowered productivity.

Accordingly, a resin composition (resin formed article) which hardly whitens even under a hot and humid environment and hardly causes a bleed-out phenomenon of additives, has been demanded.

The present invention has been made under the above circumstances, and has an object to provide a resin composition which hardly whitens even under a hot and humid environment and hardly causes a bleed-out phenomenon of additives, and a resin formed article obtained by forming the resin composition.

Solution to Problem

In order to solve the above problem, the present inventors conducted extensive studies with regard to a resin composition containing an alicyclic-structure-containing polymer and an additive. As a result, the inventor has found that a resin composition containing the alicyclic-structure-containing polymer and the particular polyglyceride-based additive hardly whitens even under a hot and humid environment, and hardly causes the bleed-out phenomenon of the additive, and has completed the present invention.

Thus, one aspect of the invention provides resin compositions and resin formed articles obtained by forming such resin compositions, as set out in the appended set of claims.

Advantageous Effects of Invention

One aspect of the invention provides a resin composition which hardly whitens even under a hot and humid environment and hardly causes a bleed-out phenomenon of additives, and a resin formed article obtained by forming the resin composition.

The resin formed article according to one embodiment of the invention is suitably used as an optical formed article, a medical formed article or the like.

Description of Embodiments

Hereinafter, the embodiments of the present invention will be classified into 1) resin composition and 2) resin formed article, and described in detail.

1) Resin composition

The resin composition according to the invention contains an alicyclic-structure-containing polymer and a polyglyceride-based additive, and is characterized in that the alicyclic-structure-containing polymer is a polymer of a norbornene-based monomer including 50 wt% or more of tetracyclo [9.2. $1.0^{2,10}.0^{3,8}$] tetradeca-3,5,7,12-tetraene, the polyglyceride-based additive includes diglycerol monooleate, diglycerol monostearate or tetraglycerol stearate, the polyglyceride-based additive has a hydroxyl value of 320 to 700 mgKOH/g, and the content of the polyglyceride-based additive is 0.2 to 2.0 parts by weight based on 100 parts by weight of the alicyclic-structure-containing polymer.

[Alicyclic-structure-containing polymer]

The alicyclic-structure-containing polymer used for the resin composition of the present invention is a polymer of a norbornene-based monomer including 50 wt% or more of tetracyclo [9.2. $1.0^{2,10}.0^{3,8}$] tetradeca-3,5,7,12-tetraene, and, according to one embodiment of the invention, refers to polymers having alicyclic structures in a main chain and/or side chains. Above all, polymers having alicyclic structures in the main chain are preferred because a resin formed article excellent in mechanical strength, heat resistance and the like can be easily obtained.

Examples of the alicyclic structure include a saturated cyclic hydrocarbon (cycloalkane) structure, an unsaturated cyclic hydrocarbon (cycloalkene) structure and the like. Above all, the cycloalkane structure and the cycloalkene structure are preferred because a resin formed article excellent in mechanical strength, heat resistance and the like can be easily obtained, and the cycloalkane structure is more preferred.

The number of carbon atoms constituting the alicyclic structure is not particularly limited, but is normally within a range of 4 to 30, preferably 5 to 20, and more preferably 5 to 15. When the number of carbon atoms constituting the alicyclic structure is within these ranges, a resin formed article having more highly balanced characteristics such as mechanical strength and heat resistance can be easily obtained.

The proportion of repeating units having alicyclic structures in the alicyclic-structure-containing polymer can be appropriately selected depending on the intended purpose. The proportion of the repeating units is normally 30 wt% or more, preferably 50 wt% or more, and more preferably 70 wt% or more based on all repeating units. When the proportion of the repeating units having alicyclic structures in the alicyclic-structure-containing polymer is 30 wt% or more, a resin formed article excellent in heat resistance, transparency and the like can be easily obtained. The remainder other than the repeating units having the alicyclic structures in the alicyclic-structure-containing polymer is not particularly limited, and is appropriately selected depending on the intended purpose.

The weight average molecular weight (Mw) of the alicyclic-structure-containing polymer is not particularly limited, but is normally 5,000 to 500,000, preferably 8,000 to 200,000, and more preferably 10,000 to 100,000. When the weight average molecular weight (Mw) of the alicyclic-structure-containing polymer is within these ranges, the mechanical strength of the resin formed article and the formability in producing the resin formed article can be more highly balanced.

The molecular weight distribution (Mw/Mn) of the alicyclic-structure-containing polymer is not particularly limited, but is normally 1.0 to 4.0, preferably 1.0 to 3.0, and more preferably 1.0 to 2.5.

The weight average molecular weight (Mw) and the number average molecular weight (Mn) of the alicyclic-structure-containing polymer can be determined as standard polyisoprene-equivalent values e.g. by gel permeation chromatography (GPC) using cyclohexane as a solvent.

A glass transition temperature (Tg) of the alicyclic-structure-containing polymer is not particularly limited, but is normally 100 to 200°C, and preferably 130 to 170°C.

When the glass transition temperature (Tg) of the alicyclic-structure-containing polymer is 100°C or higher, a resin formed article excellent in heat resistance can be easily obtained. **In** addition, the resin composition containing the alicyclic-structure-containing polymer having a glass transition temperature (Tg) of 200°C or lower shows sufficient flowability during melting and is excellent in formability.

The glass transition temperature (Tg) can be measured in accordance with JIS K 7121.

The alicyclic-structure-containing polymer is preferably an amorphous resin (resin having no melting point). When the alicyclic-structure-containing polymer is an amorphous resin, a resin formed article more excellent in transparency can be easily obtained.

The alicyclic-structure-containing polymer is a norbornene-based polymer. Above all, the norbornene-based polymer is preferred because a resin formed article excellent in heat resistance and mechanical strength can be easily obtained.

Note that, these polymers herein refer to not only a polymerization reaction product but also a hydrogenated product thereof.

Norbornene-based polymer

The alicyclic-structure-containing polymer is a norbornene-based polymer, which is a polymer obtained by polymerizing a norbornene-based monomer, including 50 wt% or more of tetracyclo $[9.2. 1.0^{2,10}.0^{3,8}]$ tetradeca-3,5,7,12-tetraene, or a hydrogenated product thereof.

Examples of the norbornene-based polymer include a ring-opening polymer of a norbornene-based monomer, a ring-opening polymer of a norbornene-based monomer and another monomer capable of ring-opening copolymerization therewith, hydrogenated products of these ring-opening polymers, an addition polymer of a norbornene-based monomer, an addition polymer of a norbornene-based monomer and another monomer copolymerizable therewith, and the like.

Examples of the norbornene-based monomer include bicyclo[2.2.1]hept-2-ene (trivial name: norbornene) and a derivative thereof (having substituents on the ring), tricyclo $[4.3.0^{1,6}.1^{2,5}]$deca-3,7-diene (trivial name: dicyclopentadiene) and a derivative thereof, tetracyclo $[9.2.1.0^{2,10}.0^{3,8}]$tetradeca-3,5,7,12-tetraene (also referred to as methanotetrahydrofluorene, 7,8-benzotricyclo $[4.3.0.1^{2,5}]$deca-3-ene, 1,4-methano-1,4,4a,9a-tetrahydrofluorene) and a derivative thereof, tetracyclo $[4.4.1^{2,5}.1^{7,10}.0]$dodeca-3-ene (trivial name: tetracyclododecene) and a derivative thereof, and the like.

Examples of the substituent include an alkyl group, an alkylene group, a vinyl group, an alkoxycarbonyl group, an alkylidene group and the like.

Examples of the norbornene-based monomer having a substituent include 8-methoxycarbonyl-tetracyclo $[4.4.0.1^{2,5} 1^{7,10}]$dodeca-3-ene, 8-methyl-8-methoxycarbonyl-tetracyclo $[4.4.0.1^{2,5}.1^{7,10}]$dodeca-3-ene, 8-ethylidene-tetracyclo $[4.4.0.1^{2,5}.1^{7,10}]$dodeca-3-ene and the like.

These norbornene-based monomers can be used either alone or in combination of two or more types. As outlined above and also further below, the amount of the repeating units derived from tetracyclo $[9.2.1.0^{2,10}.0^{3,8}]$tetradeca-3,5,7,12-tetraene in the norbornene-based polymer is 50 wt% or more.

Examples of the other monomers capable of ring-opening copolymerization with the norbornene-based monomer include a monocyclic cycloolefin-based monomer such as cyclohexene, cycloheptene, cyclooctene and derivatives thereof, and the like. Examples of these substituents include the same substituents as those shown as the substituents of the norbornene-based monomer.

Examples of the other monomers capable of addition copolymerization with the norbornene-based monomer include an $\alpha$-olefin having 2 to 20 carbon atoms such as ethylene, propylene, 1-butene, 1-pentene and 1-hexene, and derivatives thereof; a cycloolefin such as cyclobutene, cyclopentene, cyclohexene and cyclooctene, and derivatives thereof; a nonconjugated diene such as 1,4-hexadiene, 4-methyl-1,4-hexadiene, 5-methyl-1,4-hexadiene and 1,7-octadiene; and the like. Above all, the α-olefin is preferred, and ethylene is particularly preferred. Examples of these substituents include the same substituents as those shown as the substituents of the norbornene-based monomer.

A ring-opening polymer of a norbornene-based monomer, or a ring-opening polymer of a norbornene-based monomer and another monomer capable of ring-opening copolymerization therewith can be synthesized by polymerizing monomer components in the presence of a known ring-opening polymerization catalyst. Examples of the ring-opening polymerization catalyst include e.g. a catalyst including a halide of a metal such as ruthenium and osmium and a nitrate or an acetylacetone compound as well as a reducing agent, or alternatively a catalyst including a halide of a metal such as titanium, zirconium, tungsten and molybdenum or an acetylacetone compound as well as an organoaluminum compound, and the like.

The hydrogenated ring-opening polymer of the norbornene-based monomer can be normally obtained by adding a known hydrogenation catalyst containing a transition metal such as nickel and palladium to a polymerization solution of the above ring-opening polymer to hydrogenate a carbon-carbon unsaturated bond.

An addition polymer of a norbornene-based monomer, or an addition polymer of the norbornene-based monomer and another monomer copolymerizable therewith can be synthesized by polymerizing monomer components in the presence of a known addition polymerization catalyst. Examples of the addition polymerization catalyst include e.g. a catalyst including a titanium, zirconium or vanadium compound and an organoaluminum compound.

Among these norbornene-based polymers, the hydrogenated ring-opening polymer of the norbornene-based monomer is preferable because a resin formed article excellent in heat resistance, mechanical strength and the like can be easily obtained, and as the norbornene-based monomer, the hydrogenated ring-opening polymer of the norbornene-based monomer using tetracyclo[9.2.1.0$^{2,10}$.0$^{3,8}$]tetradeca-3,5,7,12-tetraene is more preferred.

The amount of the repeating units derived from tetracyclo[9.2.1.0$^{2,10}$.0$^{3,8}$]tetradeca-3,5,7,12-tetraene in the norbornene-based polymer is 50 wt% or more, and preferably is 70 wt% or more.

[Polyglyceride-based additive]

The polyglyceride-based additive constituting the resin composition according to one embodiment of the invention includes diglycerol monooleate, diglycerol monostearate or tetraglycerol stearate.

The polyglyceride compound is prepared by esterifying a fatty acid on one or more hydroxyl groups of a polyglycerol obtained through dehydration and polymerization by heating glycerin to 200 to 260°C in the presence of an alkali catalyst.

The polyglyceride compound can be synthesized in accordance with a known method (e.g. a method described in JP-A-2015-110731). Further, in one embodiment of the present invention, a commercial product can also be used as it is.

Examples of the commercial product include RIKEMAL series and POEM series (manufactured by RIKEN VITAMIN CO., LTD.), RYOTO polyglyester series (manufactured by Mitsubishi-Chemical Foods Corporation), SY-Glyster series (manufactured by Sakamoto Yakuhin Kogyo Co., Ltd.), EMALEX series (manufactured by NIHON EMULSION Co., Ltd.) and the like.

The polyglyceride-based additive has a hydroxyl value of 320 to 700 mgKOH/g, preferably 400 to 650 mgKOH/g, and more preferably 400 to 500 mgKOH/g.

When the hydroxyl value of the polyglyceride-based additive is lower than 320 mgKOH/g, the resin composition and the resin formed article readily whiten under a hot and humid environment. On the other hand, when the hydroxyl value of the polyglyceride-based additive is higher than 700 mgKOH/g, the resin composition and the resin formed article tend to whiten and the polyglyceride-based additive tends to bleed out, because the polyglyceride compound constituting such a polyglyceride-based additive is apt to be poor in compatibility with the alicyclic-structure-containing polymer.

The hydroxyl value of the polyglyceride-based additive can be measured in accordance with JIS K0070.

A resin composition containing such a polyglyceride-based additive and a resin formed article obtained by using the resin composition more hardly whiten under a hot and humid environment.

Furthermore, the polyglyceride-based additive includes one or a plurality of diglyceride compounds, and the content of a diglycerol monofatty acid ester compound is preferably 50 wt% or more, and more preferably 70 wt% or more based on the whole polyglyceride-based additive. More preferably, in this polyglyceride-based additive, the diglycerol monofatty acid ester compound is a diglycerol monooleate.

A resin composition containing such a polyglyceride-based additive and a resin formed article obtained by using the resin composition more hardly whiten and more hardly cause a bleed-out phenomenon of the additive under a hot and humid environment.

[Resin composition]

The resin composition according to one embodiment of the invention contains the alicyclic-structure-containing polymer and the polyglyceride-based additive.

The content of the polyglyceride-based additive is 0.2 to 2.0 parts by weight, preferably 0.3 to 1.0 part by weight, and more preferably 0.5 to 0.8 part by weight based on 100 parts by weight of the alicyclic-structure-containing polymer.

If the content of the polyglyceride-based additive is less than 0.2 part by weight based on 100 parts by weight of the alicyclic-structure-containing polymer, the effect cannot be sufficiently achieved, and the resin composition and the resin formed article under a hot and humid environment readily whiten. On the other hand, if the content of the polyglyceride-based additive is more than 2.0 parts by weight based on 100 parts by weight of the alicyclic-structure-containing polymer, the polyglyceride-based additive may bleed out from the resin composition and the resin formed article, and the resin composition and the resin formed article may show poor transmittance and lowered glass transition temperature because of insufficient dispersion of the polyglyceride-based additive.

In the resin composition according to one embodiment of the invention, a polyglyceride-based additive having a hydroxyl value within the above range is used in an addition amount within the above range.

When the polyglyceride-based additive is used in this aspect, the conventionally problematic phenomenon of the alicyclic-structure-containing polymer whitening under a hot and humid environment for a long period is suppressed.

The resin composition according to one embodiment of the invention may contain other components as long as the effects of the present invention are not impaired.

Examples of the other components include polymers other than the alicyclic-structure-containing polymers, as well as additives such as antioxidant, UV absorber, light stabilizer, near infrared absorber, plasticizer and acid scavenger.

Examples of the polymers other than the alicyclic-structure-containing polymer include a soft polymer and a terpene phenol resin.

The soft polymers are polymers described in JP-A-2006-124580 and the like which normally have a Tg of 30°C or lower, wherein when there is a plurality of Tgs, at least the lowest Tg is 30°C or lower. Among such soft polymers, a polymer in which a melt mass flow rate (MFR) at 230°C and 21.18 N is 10 to 100 g/10 min as measured in accordance with JIS K 7210, is preferred.

Examples of the soft polymer include e.g. an olefin-based soft polymer such as liquid polyethylene, polypropylene, poly-1-butene, ethylene/$\alpha$-olefin copolymer, propylene/$\alpha$-olefin copolymer, ethylene/propylene/diene copolymer (EPDM) and ethylene/propylene/styrene copolymer; an isobutylene-based soft polymer such as polyisobutylene, isobutylene/isoprene rubber and isobutylene/styrene copolymer; a diene-based soft polymer such as polybutadiene, polyisoprene, butadiene/styrene random copolymer, isoprene/styrene random copolymer, acrylonitrile/butadiene copolymer, acrylonitrile/butadiene/styrene copolymer, butadiene/styrene block copolymer, styrene/butadiene/styrene block copolymer, isoprene/styrene copolymer and styrene/isoprene/styrene block copolymer; a silicon-containing soft polymer such as dimethylpolysiloxane, diphenylpolysiloxane and dihydroxypolysiloxane; a soft polymer including an $\alpha,\beta$-unsaturated acid, such as polybutyl acrylate, polybutyl methacrylate, polyhydroxyethyl methacrylate, polyacrylamide, polyacrylonitrile and butyl acrylate/styrene copolymer; a soft polymer including an unsaturated alcohol and an amine or an acyl derivative thereof or an acetal, such as polyvinyl alcohol, polyvinyl acetate, polyvinyl stearate and vinyl acetate/styrene copolymer; an epoxy-based soft polymer such as polyethylene oxide, polypropylene oxide and epichlorohydrin rubber; a fluorine-based soft polymer such as vinylidene fluoride-based rubber and tetrafluoroethylene/propylene rubber; and a soft polymer such as natural rubber, polypeptide, protein, polyester-based thermoplastic elastomer, vinyl chloride-based thermoplastic elastomer and polyamide-based thermoplastic elastomer. These soft polymers may have a crosslinked structure, or may be obtained by introducing a functional group by a modification reaction.

Each of these soft polymers can be used either alone or in combination of two or more types.

Above all, the diene-based soft polymer is preferred, and a diene-based soft polymer using styrene is particularly preferred, because of particularly excellent transparency as well as heat and moisture resistance, and above all, a polystyrene-poly(ethylene/propylene)block-polystyrene is preferred from the viewpoint of heat and moisture resistance.

Among these soft polymers, it is preferred to select a polymer in which a difference ($|nD (A)-nD (B)|$) between a refractive index of the alicyclic-structure-containing polymer (nD (A)) and a refractive index of the soft polymer (nD (B)) is less than 0.005, because an optical formed article more excellent in transparency can be easily obtained.

When the resin composition according to one embodiment of the invention contains a soft polymer, its content is normally 0.05 to 0.5 part by weight, and preferably 0.1 to 0.3 part by weight based on 100 parts by weight of the alicyclic-structure-containing polymer. When the content of the soft polymer is too large, the transparency of the resin composition may decrease.

The terpene phenol resin is a product of polymerization reaction of a terpene compound and a phenol. The terpene phenol resin can be produced by a cationic polymerization reaction of 1 mol of a terpene compound and 0.1 to 15 mol of a phenol in the presence of a Friedel-Crafts catalyst at a temperature of -10 to +120°C for 0.5 to 20 hours.

Examples of the terpene compound include myrcene, alloocimene, ocimene, $\alpha$-pinene, $\beta$-pinene, dipentene, limonene, $\alpha$-phellandrene, $\alpha$-terpinene, $\gamma$-terpinene, terpinolene, 1,8-cineol, 1,4-cineole, $\alpha$-terpineol, $\beta$-terpineol, $\gamma$-terpineol, camphene, tricyclene, sabinene, paramenthadiene, carene and the like.

Examples of the phenol include phenol, cresol, xylenol, catechol, resorcin, hydroquinone, bisphenol A and the like.

Examples of the Friedel-Crafts catalyst include zinc chloride, titanium tetrachloride, tin chloride, aluminum chloride, boron trifluoride, iron chloride, antimony trichloride and the like.

In addition, a hydrogenated terpene resin oligomer obtained by hydrogenating a terpene phenol resin, or the like can also be used as the terpene phenol resin.

For the terpene phenol resin, a commercial product may be used. Examples of the commercial product include Polyster series and Mighty Ace series (manufactured by Yasuhara Chemical Co.,LTD) and the like.

When the resin composition according to one embodiment of the invention contains a terpene phenol resin, its content is normally 1 to 15 parts by weight, and preferably 2 to 10 parts by weight based on 100 parts by weight of the alicyclic-structure-containing polymer. If the content of the terpene phenol resin is too large, the thermal stability of the resin formed article may be deteriorated.

Examples of the antioxidant include a phenol-based antioxidant, a phosphorus-based antioxidant, a sulfur-based antioxidant and the like.

Examples of the phenol-based antioxidant include 3,5-di-t-butyl-4-hydroxytoluene, dibutylhydroxytoluene, 2,2'-methylenebis(6-t-butyl-4-methylphenol), 4,4'-butylidenebis(3-t-butyl-3-methylphenol), 4,4'-thiobis(6-t-butyl-3-methyl-phenol), $\alpha$-tocophenol, 2,2,4-trimethyl-6-hydroxy-7-t-butylchroman, tetrakis[methylene-3-(3',5'-dit-butyl-4'-hydroxyphenyl)propionate]methane, [pentaerythritol tetrakis[3-(3,5-di-t-butyl-4-hydroxyphenyl)propionate]] and the like.

Examples of the phosphorus-based antioxidant include distearyl pentaerythritol diphosphite, bis(2,4-di-t-butylphenyl)pentaerythritol diphosphite, tris(2,4-di-t-butylphenyl)phosphite, tetrakis(2,4-di-t-butylphenyl)4,4'-biphenyl diphosphite, trinonylphenyl phosphite and the like.

Examples of the sulfur-based antioxidant include distearyl thiodipropionate, dilauryl thiodipropionate and the like.

Examples of the UV absorber include a benzotriazole-based UV absorber, a benzoate-based UV absorber, a benzophenone-based UV absorber, an acrylate-based UV absorber, a metal complex-based UV absorber, and the like.

Examples of the light stabilizer include a hindered amine-based light stabilizer.

Examples of the near-infrared absorber include a cyanine-based near-infrared absorber, a pyrylium-based infrared absorber, a squarylium-based near-infrared absorber, a croconium-based infrared absorber, an azulenium-based near-infrared absorber, a phthalocyanine-based near-infrared absorber, a dithiol metal complex-based near-infrared absorber, a naphthoquinone-based near-infrared absorber, an anthraquinone-based near-infrared absorber, an indophenol-based near-infrared absorber, an azide-based near-infrared absorber, and the like.

Examples of the plasticizer include a phosphate triester-based plasticizer, an aliphatic monobasic acid ester-based plasticizer, a dihydric alcohol ester-based plasticizer, an oxyacid ester-based plasticizer, and the like.

Examples of the acid scavenger include magnesium oxide, zinc stearate and the like.

The contents of these components can be appropriately decided according to the purpose. The contents are normally 0.001 to 5 parts by weight, and preferably 0.01 to 1 part by weight based on 100 parts by weight of the alicyclic-structure-containing polymer.

The resin composition according to one embodiment of the invention can be obtained by mixing each component in accordance with an ordinary method. Examples of the mixing method include a method of mixing respective components in an appropriate solvent and a method of kneading them in a molten state.

The kneading can be carried out using a melt mixer such as a single-screw extruder, a twin-screw extruder, a Banbury mixer, a kneader and a feeder ruder. The kneading temperature is preferably in a range of 200 to 400°C, and more preferably 240 to 350°C. When kneading, each component may be added once and kneaded, or may be kneaded in several times while adding the components stepwise.

After kneading, the mixture may be extruded in the shape of a rod in accordance with an ordinary method, and cut using a strand cutter so as to have an appropriate length, whereby pelletization can be carried out.

The resin composition according to one embodiment of the invention hardly whitens even under a hot and humid environment.

For example, in the case where a test piece is prepared in accordance with the method described in Examples and subjected to a hot and humid test, almost no microcrack is observed in the resin composition according to one embodiment of the invention.

In addition, in the case of measuring a haze value before and after the hot and humid test, an increment of the haze value after the hot and humid test is small in the resin composition according to one embodiment of the invention.

Since the resin composition according to one embodiment of the invention hardly whitens even under a hot and humid environment and hardly causes a bleed-out phenomenon of additives, it is preferably used as a forming material for an optical formed article or a medical formed article.

2) Resin formed article

The resin formed article according to one embodiment of the invention is obtained by forming the resin composition of one embodiment of the present invention.

The method for forming the resin formed article according to one embodiment of the invention is not particularly limited, and is exemplified by conventionally known forming methods such as an injection forming method, a press forming method, an extrusion forming method and a blow forming method. Above all, the injection forming method and the press forming method are preferred and the injection forming method more preferred, because a desired resin formed article can be formed with high dimensional accuracy.

When forming a resin formed article by the injection forming method, a forming material (the resin composition) is normally put into a hopper of an injection forming machine, plasticized in a high temperature cylinder, and then the molten resin (plasticized resin) is injected from a nozzle into a die. A desired resin formed article can be obtained by cooling and solidifying the molten resin in the die.

The cylinder temperature is appropriately selected in a range of normally 150 to 400°C, preferably 200 to 350°C, and more preferably 250 to 310°C. If the cylinder temperature is excessively low, the flowability of the molten resin may be decreased, and sink or distortion may occur in the resin formed article. On the other hand, if the cylinder temperature is excessively high, silver streak may occur due to thermal decomposition of the forming material, or the resin formed article may turn yellowed.

The injection speed at which the molten resin is injected from the cylinder to the die, is preferably 1 to 1,000 cm$^3$/s. When the injection speed is within this range, a resin formed article having an excellent appearance shape can be easily obtained. The injection pressure at which the molten resin is injected from the cylinder to the die, is not particularly limited, and may be appropriately set in consideration of the type of the die, flowability of the forming material and the like. The injection pressure is normally 50 to 1,500 MPa.

In the injection forming method, normally, even after the inside of the die is filled with the molten resin, the molten resin in the die is pressurized (hereinafter this pressure is referred to as "preserved pressure") by operating the screw for a certain period until the molten resin in a gate portion of the die is completely cooled and solidified.

Generally, the preserved pressure is set within a range of the die-fastening pressure, and its upper limit is normally 200 MPa or lower, preferably 170 MPa or lower, and more preferably 150 MPa or lower. When the preserved pressure is 200 MPa or lower, a resin formed article with small distortion can be easily obtained.

On the other hand, the lower limit of the preserved pressure is normally 10 MPa or higher, preferably 12 MPa or higher, and more preferably 15 MPa or higher. When the preserved pressure is 10 MPa or higher, the occurrence of the sink is prevented, and a resin formed article excellent in dimensional accuracy can be easily obtained.

The temperature of the die is normally lower than the glass transition temperature (Tg) of the alicyclic-structure-containing polymer in the forming material, preferably a temperature lower than Tg by 0 to 50°C, and more preferably a temperature lower than Tg by 5 to 20°C. When the temperature of the die is within this range, a resin formed article with small distortion can be easily obtained.

Additionally, in the injection forming method, the forming material may be predried, or an inert gas such as nitrogen may be passed from a hopper part of an injection forming machine to suppress color fade-out of the resin formed article and to reduce generation of oxides and voids.

The conditions for predrying are not particularly limited, and predrying can be effected e.g. by vacuum drying at 100 to 110°C for 4 to 12 hours.

The resin formed article according to one embodiment of the invention hardly whitens even under a hot and humid environment and hardly causes a bleed-out phenomenon of additives.

The resin formed article according to one embodiment of the invention is preferably used as an optical formed article or a medical formed article because these properties are fully utilized.

Examples of the optical formed article include an optical lens such as an imaging lens for a camera, an imaging lens of a video camera, a sensor lens, a telescope lens, a pickup lens for an optical disk; an optical mirror; a prism; an optical film such as a polarizing film, a phase difference film; and the like.

Examples of the medical formed article include a container such as a pharmaceutical container, a cosmetic container and a food container; a medical implement such as a disposable syringe, a prefilled syringe, a vial, an eye drop container, a medical inspection cell, an infusion bag, a scalpel, a forceps and a liquid transport tube; a laboratory instrument such as a petri dish, a culture vessel and a disposable pipette; and the like.

Example

Hereinafter, the present invention will be further described in detail by way of Examples and Comparative Examples. Note that the present invention is not limited to these examples. Hereinafter, the units "parts" and "%" respectively refer to "parts by weight" and "wt%" unless otherwise indicated.

The respective properties were measured in accordance with the following methods.

(1) Weight average molecular weight (Mw)

In Production Examples 1 and 2, the weight average molecular weight (Mw) of the alicyclic-structure-containing polymer was measured by gel permeation chromatography (GPC) using cyclohexane as a solvent, and determined as a standard polyisoprene-equivalent value.

As the standard polyisoprene, a standard polyisoprene manufactured by Tosoh Corporation (Mw=602, 1390, 3920, 8050, 13800, 22700, 58800, 71300, 109000, 280000) was used.

The measurement was carried out using three columns manufactured by Tosoh Corporation (TSKgel G5000HXL, TSKgel G4000HXL, and TSKgel G2000HXL) connected in series, under a condition of a flow rate of 1.0 mL/min, an amount of the injected sample of 100 $\mu$L and a temperature of the column of 40°C.

(2) Hydrogenation ratio

The hydrogenation ratio in the hydrogenation reaction of the polymer was measured by $^1$H-NMR.

(3) Glass transition temperature (Tg)

The glass transition temperatures (Tg) of the alicyclic-structure-containing polymer and the resin composition were measured using a differential scanning calorimeter (DSC6220SII, manufactured by SII NanoTechnology Inc.) at an increase rate of 10°C/min in accordance with JIS K7121.

(4) Hydroxyl value

The hydroxyl value of the polyglyceride-based additive was measured in accordance with JIS K0070.

(5) Heat and humidity resistance (anti-whitening property)

(Microcrack)

The resin compositions obtained in Examples or Comparative Examples were used as forming materials to prepare a formed article having a thickness of 5 mm or 9 mm, and a length and a width of 65 mm by an injection forming method.

The resulting formed articles were preserved in a hot and humid tester (temperature: 85°C, relative humidity: 90%) for 1000 hours, then the formed articles were taken outside of the tester (rapidly transferred to the environment outside the tester), and allowed to stand at 25°C for 72 hours.

White light was allowed to enter from the lateral sides of the formed articles, and microcracks of the formed articles were observed, and evaluated in accordance with the following criteria.

Good: No microcrack occurred.

**[0122]**

　Fair: Microcracks occurred in less than 30% of area in the whole formed article.
　Bad: Microcracks occurred in not less than 30% of area in the whole formed article.

(Change of haze)

The resin compositions obtained in Examples or Comparative Examples were used as forming materials to prepare a formed article having a thickness of 5 mm, and a length and a width of 65 mm by an injection forming method.

For the resulting formed articles, haze was measured [haze value: ($\alpha$)] using a haze meter (product name: "NDH2000", manufactured by NIPPON DENSHOKU INDUSTRIES Co.,LTD). After measuring the haze, the formed articles were preserved in a hot and humid tester (temperature: 85°C, relative humidity: 90%) for 1000 hours, then the formed articles were taken outside of the tester (rapidly transferred to the environment outside the tester) and allowed to stand at 25°C for 72 hours. For the formed articles, haze was measured [haze value: ($\beta$)], and changes of haze ($\Delta$HAZE) were calculated on the basis of the following equation. It is indicated that the smaller the $\Delta$HAZE is, the better the heat and humidity resistance is.

$$\Delta HAZE = HAZE\ value\ (\beta) - HAZE\ value\ (\alpha)$$

(6) Die soiling property

The resin compositions obtained in Examples or Comparative Examples were used as forming materials to carry out injection forming with continuous 500 shots under the following conditions. Subsequently, the dies that had been used, were observed to evaluate die soiling property on the basis of the presence or absence of white spots adhering to the dies.

(Forming condition)

Injection forming machine: ROBOSHOT $\alpha$-100B, manufactured by FANUC CORPORATION
Die: A die having a length of 65 mm, a width of 65 mm and a thickness of 3 mm Cylinder temperature: (Tg+140)°C
Die temperature: (Tg-10)°C
Injection pressure: 70 MPa

[Production Example 1]

To a polymerization reactor whose inside had been replaced with nitrogen, 690 parts of dehydrated toluene, 210 parts of tetracyclo[9.2.1.0$^{2,10}$.0$^{3,8}$]tetradeca-3,5,7,12-tetraene, 75 parts of tetracyclo[4.4.1$^{2,5}$.1$^{7,10}$.0]dodeca-3-ene, 15 parts of bicyclo[2.2.1]hept-2-ene, 1.1 parts of 1-hexene, 11 parts of a toluene solution containing 0.3% of tungsten chloride and 0.5 part of triisobutylaluminum were put, and subjected to ring-opening polymerization reaction at 1 atom and 60°C for 1 hour.
The polymer in the resulting polymerization solution had a number average molecular weight (Mn) of 14,000, a weight average molecular weight (Mw) of 24,000, and a molecular weight distribution (Mw/Mn) of 1.7.
To 240 parts of this polymerization solution, 4 parts of diatomaceous earth- supported nickel catalyst ("T8400RL", nickel carrying ratio: 58%, manufactured by JGC Catalysts and Chemicals Ltd.) was added, and subjected to hydrogenation reaction in an autoclave at 4.41 MPa (45 kgf/cm$^2$) and 190°C for 5 hours. After the hydrogenation reaction, the catalyst residue in the hydrogenation reaction solution was filtered off to obtain a colorless transparent solution (hydrogenation reaction solution I). The hydrogenation ratio in the hydrogenation reaction was 99% or higher.
While stirring a mixed solution of 250 parts of acetone and 250 parts of isopropanol, the hydrogenation solution I was poured into this mixed solution to precipitate a hydrogenated polymer, which was taken by filtration. The resulting hydrogenated polymer was washed with 200 parts of acetone and then dried in a vacuum dryer at 100°C depressurized to 0.13 kPa or lower for 24 hours.
The resulting hydrogenated polymer [polymer (1)] had a number average molecular weight (Mn) of 16,500, a weight average molecular weight (Mw) of 28,000, a molecular weight distribution (Mw/Mn) of 1.7, and a glass transition temperature (Tg) of 145°C.

[Production Example 2]

A bath-type reactor with an inner volume of 1.0 L equipped with a stirrer was sufficiently replaced with nitrogen. To the reactor, 960 parts of toluene, 220 parts of 1,4-methano-1,4,4a,9a-tetrahydrofluorene and 0.166 part of 1-hexene were charged, and a temperature of the solvent was raised to 40°C while stirring at a rotation of 300 to 350 rpm. 23.5 parts of toluene, 0.044 part of rac-ethylenebis (1-indenyl) zirconium dichloride and 6.22 parts of a toluene solution containing 9.0 wt% of methylaluminoxane (TMAO-200 series, manufactured by Tosoh Finechem Corporation) were mixed in a glass container to obtain a catalyst. When the temperature of the solvent in the reactor reached 40°C, the catalyst was added to the reactor, and immediately thereafter ethylene gas at 0.08 MPa was introduced into the liquid phase to initiate polymerization. In relation to a position of a spouting port for ethylene, a ratio (B)/(A) of the distance (B) between the ethylene spouting port and the liquid level to the distance (A) between the bottom of the reactor and the liquid level, was 0.60. When ethylene gas was consumed, ethylene gas was automatically supplied, so that the pressure of ethylene gas was kept constant. After 30 minutes, introduction of ethylene gas was terminated, the reactor was depressurized, and then 5 parts of methanol was added to terminate the polymerization reaction.
The resulting reaction solution was filtered with a filter aid (product name: RADIOLITE #800, manufactured by SHOWA CHEMICAL INDUSTRY CO.,LTD.), and the filtrate was poured into isopropanol containing 0.05% of hydrochloric acid to precipitate a polymer. The precipitated polymer was separated, washed and dried under reduced pressure at 100°C for 15 hours.

The resulting polymer [polymer (2)] had a number average molecular weight (Mn) of 64,400, a molecular weight distribution (Mw/Mn) of 2.0, and a glass transition temperature (Tg) of 170°C.

[Compounds used in Examples and Comparative Examples]

In Examples and Comparative Examples, the following additives were used.

Additive (1): POEM DO-100V (diglycerol monooleate), hydroxyl value: 412 mgKOH/g, manufactured by RIKEN VITAMIN CO.,LTD.
Additive (2): POEM DS-100A (diglycerol monostearate), hydroxyl value: 451 mgKOH/g, manufactured by RIKEN VITAMIN CO.,LTD.
Additive (3): POEM J-4081V (tetraglycerol stearate), hydroxyl value: 337 mgKOH/g, manufactured by RIKEN VITAMIN CO.,LTD.
Additive (4): RIKEMAL O-71DE (diglycerol oleate), hydroxyl value: 300 mgKOH/g, manufactured by RIKEN VITAMIN CO., LTD.

[Example 1]

100 parts of the polymer (1) obtained in Production Example 1 and 0.5 part of the additive (1) were kneaded with a twin-screw mixer (product name: HK-25D, manufactured by Parker corporation, Inc.) and extruded to obtain a pelletized resin composition.
The pellet was dried by heating at 100°C for 4 hours, then put into an injection forming machine (ROBOSHOT α-100B, manufactured by FANUC CORPORATION), and injection-formed with a cylinder temperature at 285°C (Tg+140)°C to obtain a test piece for the hot and humid resistance test and the glass transition temperature (Tg) measurement, which was subjected to the test and the measurement. The results are shown in Table 1.

[Examples 2 to 6, and Comparative Examples 1 to 4] (Example 6 is a comparative example not encompassed by the claims)

Resin compositions were obtained in the same manner as Example 1 except that the composition was changed to the compositions described in Table 1, and these resin compositions were subjected to various measurements. The results are shown in Table 1.

**Table** 1

| | | Examples | | | | | | Comparative Examples | | | |
|---|---|---|---|---|---|---|---|---|---|---|---|
| | | 1 | 2 | 3 | 4 | 5 | 6 | 1 | 2 | 3 | 4 |
| Alicyclic-structure-containing polymer | Type | Polymer (1) | Polymer (1) | Polymer (1) | Polymer (1) | Polymer (1) | Polymer (2) | Polymer (1) | Polymer (1) | Polymer (1) | Polymer (2) |
| | Addition amount (parts) | 100 | 100 | 100 | 100 | 100 | 100 | 100 | 100 | 100 | 100 |
| Polyglyceride-based additive | Type | Additive (1) | Additive (1) | Additive (2) | Additive (3) | Additive (2) | Additive (1) | Additive (1) | Additive (4) | Additive (2) | Additive (1) |
| | Hydroxyl value (mgKOH/g) | 412 | 412 | 451 | 337 | 451 | 412 | 412 | 300 | 451 | 412 |
| | Addition amount (parts) | 0.5 | 2 | 0.8 | 0.5 | 0.2 | 0.8 | 0.1 | 0.8 | 2.2 | 0.1 |
| Heat and humidity resistance | Microcrack | Good | Good | Good | Good | Fair | Good | Bad | Bad | Good | Bad |
| | Change of haze ($\Delta$HAZE) | 0.3 | 1.7 | 0.8 | 1.8 | 1.3 | 0.6 | 2.3 | 3.5 | 1.9 | 2.4 |
| Die soiling property | | None | None | None | None | None | None | None | None | Any | None |
| Change of Tg (°C) | | -3 | -10 | -5 | -3 | -2 | -6 | -1 | -5 | -13 | -1 |

**EP 3 342 821 B1**

The followings can be seen from Table 1.

The resin compositions in Examples 1 to 6 are excellent in heat and humidity resistance, and hardly cause bleed phenomenon, and prevent the die soiling. **In** addition, regarding the glass transition temperatures of these resin compositions, their decrements from the glass transition temperature of the alicyclic-structure-containing polymer are small, indicating that the heat resistance of the alicyclic-structure-containing polymer is maintained.

On the other hand, the resin compositions in Comparative Examples 1 and 4 are bad in the heat and humidity resistance because the content of the polyglyceride-based additive is small.

The resin composition in Comparative Example 2 is bad in the heat and humidity resistance because it contains a polyglyceride-based additive having a small hydroxyl value.

The resin composition in Comparative Example 3 causes the bleed out of the additive and the die soiling because the content of the polyglyceride-based additive is large. **In** addition, the glass transition temperature of the resin composition is greatly lowered, compared to that of the alicyclic-structure-containing polymer that is used.

**Claims**

1. A resin composition comprising an alicyclic-structure-containing polymer and a polyglyceride-based additive, wherein

   the alicyclic-structure-containing polymer is a polymer of a norbornene-based monomer including 50 wt% or more of tetracyclo [9.2. $1.0^{2,10}.0^{3,8}$] tetradeca-3,5,7,12-tetraene,
   the polyglyceride-based additive includes diglycerol monooleate, diglycerol monostearate or tetraglycerol stearate,
   the polyglyceride-based additive has a hydroxyl value of 320 to 700 mgKOH/g, and
   the content of the polyglyceride-based additive is 0.2 to 2.0 parts by weight based on 100 parts by weight of the alicyclic-structure-containing polymer.

2. The resin composition according to claim 1, wherein the polyglyceride-based additive comprises one or a plurality of diglyceride compounds, and a content of a diglycerol monofatty acid ester compound is 50 wt% or more based on the whole polyglyceride-based additive.

3. The resin composition according to claim 2, wherein the diglycerol monofatty acid ester compound is a diglycerol monooleate.

4. The resin composition according to claim 3, which is used as a forming material for an optical formed article or a medical formed article.

5. A resin formed article obtained by forming the resin composition according to any one of claims 1 to 4.

**Patentansprüche**

1. Harzzusammensetzung, umfassend ein eine alicyclische Struktur enthaltendes Polymer und ein Additiv auf Polyglycerid-Basis, wobei

   das eine alicyclische Struktur enthaltende Polymer ein Polymer eines Monomers auf Norbornen-Basis ist, das 50 Gew.-% oder mehr Tetracyclo[9.2. $1.0^{2,10}.0^{3,8}$]tetradeca-3,5,7,12-tetraen beinhaltet,
   das Additiv auf Polyglycerid-Basis Diglycerinmonooleat, Diglycerinmonostearat oder Tetraglycerinstearat beinhaltet,
   das Additiv auf Polyglycerid-Basis eine Hydroxylzahl von 320 bis 700 mgKOH/g aufweist und
   der Gehalt des Additivs auf Polyglycerid-Basis 0,2 bis 2,0 Gewichtsanteile, bezogen auf 100 Gewichtsanteile des eine alicyclische Struktur enthaltenden Polymers, beträgt.

2. Harzzusammensetzung nach Anspruch 1, wobei das Additiv auf Polyglycerid-Basis eine oder mehrere Diglycerid-Verbindungen umfasst und der Gehalt an einer Diglycerinmonofettsäureester-Verbindung 50 Gew.-% oder mehr, bezogen auf das gesamte Additiv auf Polyglycerid-Basis, beträgt.

3. Harzzusammensetzung nach Anspruch 2, wobei die Diglycerinmonofettsäureester-Verbindung ein Diglycerinmonooleat ist.

4. Harzzusammensetzung nach Anspruch 3, die als Formmaterial für einen optischen Formkörper oder einen medizinischen Formkörper verwendet wird.

5. Harzformkörper, erhalten durch Formen der Harzzusammensetzung nach einem der Ansprüche 1 bis 4.

**Revendications**

1. Composition de résine comprenant un polymère contenant une structure alicyclique et un additif à base de polyglycéride, dans laquelle

le polymère contenant une structure alicyclique est un polymère d'un monomère à base de norbornène incluant 50 % en poids ou plus de tétracyclo[9.2. 1.0$^{2,10}$.0$^{3,8}$]tétradéca-3,5,7,12-tétraène,
l'additif à base de polyglycéride inclut du monooléate de diglycérol, du monostéarate de diglycérol ou du stéarate de tétraglycérol,
l'additif à base de polyglycéride a un indice d'hydroxyle de 320 à 700 mgKOH/g, et
la teneur en l'additif à base de polyglycéride est de 0,2 à 2,0 parties en poids pour 100 parties en poids du polymère contenant une structure alicyclique.

2. Composition de résine selon la revendication 1, dans laquelle l'additif à base de polyglycéride comprend un ou plusieurs composés diglycérides, et la teneur en un composé ester de monoacide gras et de diglycérol est de 50 % en poids ou plus par rapport à l'additif à base de polyglycéride total.

3. Composition de résine selon la revendication 2, dans laquelle le composé ester de monoacide gras et de diglycérol est un monooléate de diglycérol.

4. Composition de résine selon la revendication 3, qui est utilisée en tant que matériau de façonnage pour un article optique façonné ou un article médical façonné.

5. Article façonné en résine obtenu par façonnage de la composition de résine selon l'une quelconque des revendications 1 à 4.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010184955 A
- JP 2015110731 A
- JP 2013185141 A
- JP 2015199939 A
- JP 2006124580 A